# EUROPÄISCHE PATENTSCHRIFT

(11) **EP 0 709 433 B1**
(45) Veröffentlichungstag und Bekanntmachung des Hinweises auf die Patenterteilung: **04.08.1999**
(21) Anmeldenummer: 95116695.8
(22) Anmeldetag: 23.10.1995
(51) Int. Cl.: C08L 81/00, C08L 81/02, C08L 81/04, C08L 81/06, C08K 7/04

(54) **Formmasse zur Verarbeitung sinterfähiger Polymerpulver durch Spritzgiessen**
Injection moulding masses for processing sinterable polymer powder
Masse à mouler pour le façonnage de poudre de polymère frittable par injection

(30) Priorität: 31.10.1994 DE 4438962
(43) Veröffentlichungstag der Anmeldung: 01.05.1996
(73) Patentinhaber: Ticona GmbH, 65451 Kelsterbach (DE)
(72) Erfinder: Scheckenbach, Helmut, DI., D-63225 Langen (DE); Schleicher, Andreas, Dr., D-65614 Beselich (DE); Bayer, Michael, DI., D-86462 Langweid (DE)

(56) Entgegenhaltungen:
- EP-A- 0 459 229
- US-A- 4 108 939
- DATABASE WPI Section Ch, Week 9408, Derwent Publications Ltd., London, GB; Class A17, AN 94-062161 & JP-A-6 016 935 (MITSUBISHI KASEI CORP) 25. Januar 1994

## Beschreibung

Die Erfindung bezieht sich auf eine Polymer-Formmasse, die ein sinterbares Polymer gemäß Anspruch 1 und ein thermoplastisches Bindemittel auf Wachsbasis enthält und zur Herstellung von gesinterten Polymer-Formteilen verwendet wird.

Bekannt ist die Verwendung von phenolischen Verbindungen zur Herstellung Polyphenylensulfid-haltiger Sinterformteile (vgl. US 4 108 939). Die phenolischen Verbindungen werden einem Polyphenylensulfidpulver zugemischt, um eine formbare Masse zu erhalten. Die geformte Masse wird in einer Vorstufe zur Sinterung thermisch gehärtet, wobei eine Phenolharz-haltige Polyphenylensulfid-Masse entsteht. Die formbare Masse ist nicht durch Spritzgießen oder Extrusion verarbeitbar, da eine thermische Behandlung zu einer Erhärtung führt.

Aufgabe der Erfindung ist ein Verfahren zur Erzeugung geformter Sinterteile zu finden, wobei sinterbare Polymere durch Zugabe eines geeigneten Binders mit thermoplastischen Formgebungsmethoden bearbeitet werden können.

Es wurde gefunden, daß die Verwendung eines thermoplastischen, organischen Bindersystems auf Wachsbasis die Verarbeitung von sinterbaren Polymeren mit Hilfe thermoplastischer Formgebungsmethoden wie Spritzgießen und Extrusion erlaubt.

Die Erfindung betrifft somit eine Formmasse, die mindestens ein sinterbares Polymer gemäß Anspruch 1 und einen thermoplastischen Binder auf Wachs-Basis enthält.

Die Erfindung betrifft auch ein Verfahren zur Herstellung von gesinterten Formteilen, wobei aus einer Formmasse, die mindestens ein sinterbares Polymer gemäß Anspruch 1 und ein thermoplastisches Bindemittel auf Wachsbasis enthält, durch ein Formgebungsverfahren wie Spritzgießen, Extrusion oder Pressen ein geformtes Teil hergestellt wird, das einem Sinterprozeß unterworfen wird.

Weiterhin betrifft die Erfindung ein Sinterformteil, hergestellt aus einer Formmasse, die ein sinterfähiges Polymer gemäß Anspruch 1 und einen thermoplastischen Binder enthält.

Die erfindungsgemäße Formmasse enthält ein sinterbares Polymer in Pulverform. Die Pulver besitzen die Eigenschaft, daß sie unter Temperatureinwirkung an den Berührungspunkten der Körner zunächst Brücken und später Hälse ausbilden, die sich mit fortdauernder Temperatureinwirkung zu einem durchgehenden Gefüge verändern. Dieser Vorgang läuft entweder ohne Schmelzebildung oder in einem Gelzustand ab und ist im allgemeinen mit einer Volumenschwindung verbunden.

Die Sinterungstemperatur wird so gewählt, daß die Sinterungstemperatur unterhalb des Schmelzpunktes oder des Zersetzungspunktes des sinterbaren Polymers liegt.

Das sinterbare Polymer wird als feinkörniges Pulver mit dem thermoplastischen Binder vermischt. Aus der Mischung wird durch ein Formgebungsverfahren wie Spritzgießen, Extrusion oder Pressen ein Formteil hergestellt, das anschließend in einer Temperaturbehandlung verfestigt wird. Die daraus erhaltenen Formteile können anschließend, falls erforderlich, mit Hilfe von spanabhebenden Bearbeitungsverfahren in ihre Endform gebracht werden.

Sinterbare Polymere sind Polymere mit einem genügend hohen Schmelzpunkt, der eine Sinterung erlaubt. Die sinterbaren Polymere haben einen Schmelzpunkt von mindestens 240° C, bevorzugt von mindestens 260° C. Solche Polymere finden sich beispielsweise in folgenden Polymerklassen: Fluorpolymere (wie Polytetrafluorethylen (PTFE), Tetrafluorethylen /Ethylen-Copolymere (ETFE), Polytrifluorchlorethylen (PCTFE), Trifluorchlorethylen/Ethylen-Copolymere (ECTFE), Perfluoralkoxy (PFA)), Polyetherketon (PEK), Polyarylensulfon (PSU), Polyarylethersulfone (PES), Polyarylensulfid (PAS), Polyimide (PI), Polyamidimide (PAI), Polyetherimide (PEI), Polyesterimide, Polyhydantoine, Polycycloene, flüssig-kristalline Polymere (LCP), oxidierte oder teiloxidierte Polyarylensulfide. Geeignet sind auch die Polymere Poly-oxadiazo-benzimidazol, Polybenzimidazol (PBI), Polyimidazopyrolon (Pyron).

Polyarylensulfide, die auch Polyarylenthioether genannt werden, sind Polymere, die mindestens eine Arylensulfid-Einheit (-A-S-; A = Arylen-Rest, S = Schwefel) enthalten. Arylene sind beispielsweise Phenylen, Biphenylen (-C₆H₄-C₆H₄-), Naphthalen, Anthracen oder Phenanthren, die ein- oder mehrfach substituiert sein können. Substituenten sind z.B. geradkettige, cyclische oder verzweigte C₁-C₂₀-Kohlenwasserstoffreste, wie C₁-C₁₀-Alkylreste, z.B. Methyl, Ethyl, n-Propyl, iso-Propyl, n-Butyl, t-Butyl oder n-Hexyl, oder C₆-C₁₄-Arylreste, z.B. Phenyl oder Naphtyl; Halogene, Sulfonsäure-, Amino-, Nitro-, Cyano-, Hydroxy-, oder Carboxylgruppen.

Polyarylensulfoxide sind Polymere, die wenigstens eine Arylensulfoxid-Einheit (-Ar-SO- ; Ar = Arylen-Rest, SO = Sulfoxid-Gruppe) enthalten.

Polyarylensulfide, insbesondere Polyphenylensulfid, lassen sich auf Grundlage der Reaktion von dihalogenierten Aromaten mit Natriumsulfid nach EDMONDS und HILL herstellen. Polyarylensulfide und deren Herstellung sind in "Ullmann's Encyclopedia of Industrial Chemistry, Volume A21, B. Elvers, S. Hawkins und G. Schulz (Eds.), VCH, Weinheim-New York 1992, S. 463-472) beschrieben, worauf Bezug genommen wird.Die Synthese von sulfongruppenhaltigen Polyarylensulfiden ist in Chimia 28(9), (1974) 567 beschrieben, worauf ebenfalls Bezug genommen wird.

Polyarylensulfoxide können durch Oxidation von Polyarylensulfiden mit geeigneten Verfahren gewonnen werden. Die Herstellung von Polyarylensulfoxiden kann z.B. durch Oxidation mit Ozon, wie in der am 4. Mai 1993 eingereichten deutschen Patentanmeldung Nr. P 43 14 736.4 mit dem Titel "Oxidation von Polyarylensulfiden" beschrieben und worauf Bezug genommen wird, erfolgen.

Die Oxidation der Polyarylensulfide kann so durchgeführt werden, daß nur ein Teil der Sulfidbrücken in Sulfoxidgruppen überführt werden (unvollständige Oxidation z.B. durch Einsatz unterstöchiometrischer Mengen Oxidationsmittel). Solche Oxidationsprodukte werden unter dem Begriff Polyarylensulfoxide mit umfaßt. Die Oxidationsbedingungen können auch so angepaßt werden (Temperatur, Ozonkonzentration), daß neben Sulfoxid- auch Sulfonbrücken gebildet werden.

Polyarylensulfone und Polysulfone sind Polymere, die mindestens eine Arylensulfon-Einheit (-A-SO₂- ; A: Arylen-Rest, SO₂: Sulfongruppe) enthalten. Polyarylensulfone können beispielsweise durch Oxidation von Polyarylensulfiden mittels Wasserstoffperoxid oder Persäuren hergestellt werden. Die Herstellung von Polyarylensulfonen ist beispielsweise beschrieben in DE 43 14 737A1 und DE 43 14 738 A1, worauf Bezug genommen wird.

Polysulfone sind beschrieben in "Encyclopedia of polymer science and engineering, Volume 13, Wiley, New York 1988, Seite 196-211, Stichwort 'Polysulfones' ", worauf Bezug genommen wird.

Neben den reinen Polymeren können Mischungen aus sinterbaren Polymeren eingesetzt werden. Als vorteilhaft haben sich Mischungen aus Polyarylensulfonen mit Polyarylensulfoxiden und/oder Polyarylensulfiden erwiesen.
Besonders vorteilhaft als sinterbares Polymer sind Mischungen, die folgende Komponenten enthalten:
(A) mindestens einem Polyarylensulfon mit einem Anteil von 33 bis 99 Gew.-%,
(B) mindestens einem Polyarylensulfoxid mit einem Anteil von 1 bis 67 Gew.-%, vorzugsweise 5 bis 50 Gew.-%, insbesondere 10 bis 40 Gew.% und/oder
(C) mindestens einem Polyarylensulfid mit einem Anteil von 1 bis 67 Gew.-%, vorzugsweise 1 bis 40 Gew.-%, insbesondere 1 bis 25 Gew.-%,
wobei die Summe der Komponenten (A), (B) und/oder (C) stets 100 Gew.-% beträgt.

Statt einer Mischung, die ein Polyarylensulfon, Polyarylensufoxid und/oder ein Polyarylensulfid enthält, kann auch ein teiloxidiertes Polyarylensulfid eingesetzt werden, das neben den Arylensulfid-Einheiten auch Arylensulfoxid- und/oder Arylensulfon-Einheiten enthält. Teiloxidierte Polyarylensulfide und deren Herstellung sind beispielsweise in DE 43 14 737 A1 beschrieben, worauf Bezug genommen wird.

Das teiloxidierte PAS kann auch mit der Mischung der Komponenten A, B, C oder mit einer oder zwei der Komponenten A, B, C gemischt werden.

Geeignete Polyarylensulfide, Polyarylensulfoxide, Polyarylensulfone und teiloxidierten Polyarylensulfide haben beispielsweise eine mittlere Molmasse M_{w} von 4 000 bis 400 000, vorzugsweise von 10 000 bis 150 000, insbesondere 25 000 bis 100 000. Diese Molmassen werden bei den löslichen Polymeren gewöhnlich durch Gelpermeationschromatographie (GPC) bestimmt.

Die mittlere Teilchengröße D₅₀ der sinterbaren Polymere liegt im allgemeinen im Bereich von 0,5x10⁻⁶ bis 500x10⁻⁶ m, vorzugsweise 0,5x10⁻⁶ bis 300x10⁻⁶ m und insbesondere 0,5x10⁻⁶ bis 200x10⁻⁶ m.

Die Formmasse kann neben den sinterbaren Polymeren Stoffe wie Kohlenstofffasern, Mineralfasern (z.B. Glasfaser), Metall, keramische Materialien, Glas, Polymere oder Fluorpolymere (z.B. PTFE) oder bei Polymeren übliche Füllstoffe, enthalten. Die zugesetzten Stoffe können einen Gewichtsanteil von bis zu 90 %, bezogen auf die Sintermasse, vorteilhaft bis zu 60 % und besonders vorteilhaft bis zu 30 %, enthalten.

Neben dem sinterbaren Polymer enthält die Formmasse Wachse. Diese Wachse sind Naturwachse, voll- oder halbsynthetische Wachse, Polyolefinwachse oder Amidwachse. Bevorzugt sind als Wachse halbsynthetische Wachse auf Basis Rohmontanwachs und Polyolefinwachse.

Bevorzugte halbsynthetische Wachse auf Basis Rohmontanwachs haben folgende Kenndaten:

| | |
|---|---|
| Tropfpunkt | 79 bis 90° C |
| Säurezahl | 5 bis 35 mg KOH/g |
| Verseifungszahl | 70 bis 160 mg KOH/g |
| Dichte | 0,97 bis 1,03 g/cm³ |
| Viskosität | 20 bis 80 mPa.s bei 100° C. |

Bevorzugte Polyolefinwachse haben folgende Kenndaten:

| | |
|---|---|
| Tropfpunkt | 102 bis 158° C |
| Säurezahl | 0 bis 64 mg KOH/g |
| Verseifungszahl | 0 bis 115 mg KOH/g |
| Dichte | 0,87 bis 1,03 g/cm ³ |
| Viskosität | 100 bis 1500 mPa.s bei 170° C. |

Die halbsynthetischen Wachse auf Basis Rohmontanwachs entstehen im allgemeinen durch oxidative Bleichung von Rohmontanwachs und Verestern des so erhaltenen Säurewachses mit einem C₂- bis C₈-Diol. Wachse dieses Typs sind seit vielen Jahren im Handel erhältlich.

Polyolefinwachse entstehen zum Beispiel durch Massepolymerisation im Niederdruckverfahren nach Ziegler. Diese Polyolefinwachse können durch Behandeln der Schmelze mit Luft zu Oxidaten umgesetzt werden. Auch diese Wachse sind seit vielen Jahren im Handel erhältlich.

Vorteilhaft ist der Zusatz von Ethylen-Vinylacetat-Copolymer (EVA-Copolymer) zum thermoplastischen Binder, zum Beispiel ein Ethylen-Vinylacetat-Copolymer mit einem Schmelzindex nach ASTM D 1238 von 0,2 bis 440 g/10 min, vorzugsweise 0,2 bis 168 g/10 min, einen Vinylacetatanteil von 11 bis 42 %, vorzugsweise 11 bis 28 %, und eine Vicat-Erweichungstemperatur nach ASTM D 790 von 36 bis 80° C vorzugsweise 74 bis 79° C. Ethylen-Vinylacetat-Copolymere sind im Handel erhältlich.

Vorteilhaft ist auch der Zusatz von einem Peroxid zum thermoplastischen Binder, wenn das Wachs vernetzt werden soll. Dabei ist besonders vorteilhaft die Verwendung von einem organischen Peroxid, das eine Scorch-Temperatur von mindestens 100° C hat. Geeignete organische Peroxide sind z. B. 1,1-Di(t-butyl-peroxi)-trimethyl-cyclohexan, n-Butyl-4,4-di(t-butylperoxi)valerat, Dicumylperoxid, t-Butylcumyl-peroxid, 1,3-Di(t-butylperoxi-isopropyl)benzol und 3,3,6,6,9,9-Hexa-methyl-1,2,4,5-tetraoxa-cyclononan, vorzugsweise 2,5-Dimethyl-2,5-di(t-butyl-peroxi)hexan.

Günstig ist auch der Zusatz zum thermoplastischen Binder von einem Alkohol mit einer Molmasse von mindestens 300. Der Alkohol kann entweder in fester oder in flüssiger Form vorliegen. Die zu verwendenden Alkohole sind unlöslich in den übrigen Bestandteilen der Formmasse und werden beispielsweise durch Polymerisation von Alkylenoxiden hergestellt. Solche Alkohole, beispielsweise Glykol-Polyäther, sind in Wasser, Ethanol, Isopropanol oder Aceton bis zu einer Konzentration von mindestens 40 % löslich und lassen sich rückstandsfrei thermisch aus dem Formteil entfernen. Es können primäre, sekundäre oder tertiäre und auch ein-, zwei- oder dreiwertige Alkohole eingesetzt werden. Der Siedepunkt der zu verwendenden Alkohole liegt im allgemeinen oberhalb 150°C.

Dem thermoplastischen Binder wird auch ein Radikalbildner vorteilhaft zugesetzt. Ein Radikalbildner ist z.B. ein Azo-Ester, vorzugsweise 2,2-Azo-bis(2-acetoxy-propan).

Der thermoplastische Binder sollte einen Schmelzpunkt von mindestens 40° C bei einer Schmelzviskosität von mindestens 10 mPa.s haben.

Die Formmasse hat beispielsweise folgende Zusammensetzung:

| | | |
|---|---|---|
| Polymer-Sinterpulver | 60 bis 80, | vorzugsweise 65 bis 75 Gew.Teile |
| halbsynthetisches Wachs | 1 bis 10, | vorzugsweise 1,5 bis 6 Gew.Teile |
| Polyolefinwachs | 2 bis 10, | vorzugsweise 3 bis 6 Gew.Teile |
| EVA-Copolymer | 1 bis 10, | vorzugsweise 1,5 bis 3 Gew.Teile |
| organisches Peroxid | 0,01 bis 0,05, | vorzugsweise 0,02 bis 0,04 Gew.Teile |
| Azo-Ester | 0,01 bis 0,05, | vorzugsweise 0,02 bis 0,04 Gew.Teile |
| Alkohol | 1 bis 10, | vorzugsweise 1,5 bis 6 Gew.Teile. |

Die Formmasse hat besonders bevorzugt folgende Zusammensetzung:
60 bis 80 Gew.-Teilen eines sinterbaren Polymers gemäß Anspruch 1,
1 bis 10 Gew.-Teilen eines halbsynthetischen Wachses auf Basis Rohmontanwachs mit einem Tropfpunkt von 79 bis 90°C, einer Säurezahl von 5 bis 35 mg KOH/g, einer Verseifungszahl von 70 bis 160 mg KOH/g, einer Dichte von 0,97 bis 1,03 g/cm³ und einer Viskosität von 20 bis 80 mPa.s bei 100°C,
2 bis 10 Gew.-Teilen eines Polyolefinwachses mit einem Tropfpunkt von 102 bis 158°C, einer Säurezahl von 0 bis 64 mg KOH/g, einer Verseifungszahl von 0 bis 115 mg KOH/g, einer Dichte von 0,87 bis 1,03 g/cm³ und einer Viskosität von 100 bis 1500 mPa.s bei 170°C,
1 bis 10 Gew.-Teilen eines EVA-Copolymers mit einem Schmelzindex nach ASTM D 1238 von 0,2 bis 440 g/10 min, einen Vinylacetatanteil von 11 bis 42 % und einer Vicat-Erweichungstemperatur nach ASTM D 790 von 36 bis 80°C,
0,01 bis 0,05 Gew.-Teilen eines organischen Peroxids mit einer Scorch-Temperatur von mindestens 100°C,
0,01 bis 0,05 Gew.-Teilen eines Azoesters und
1 bis 10 Gew.-Teilen eines Alkohols.

Beispielhaft wird die Herstellung und Verarbeitung der erfindungsgemäßen Formmasse, die ein sinterbares Polymer mit einem Schmelzpunkt oberhalb von 240° C enthält, im folgenden beschrieben:

### 1. Thermoplastischer Binder

Zur Herstellung des thermoplastischen Binders werden das halbsynthetische Wachs auf Basis Rohmontanwachs und das Polyolefinwachs bei einer Temperatur von ca. 150°C in einem geeigneten Rührgefäß aufgeschmolzen und zu einer homogenen Schmelze verarbeitet. Unter Rühren erfolgt nun die Zugabe des Ethylen-Vinylacetat-Copolymers und des Alkohols zur Schmelze. Die Mischung wird bei ca. 150°C bis zur vollständigen Auflösung aller Komponenten in der Schmelze gerührt. Abschließend erfolgt die vorsichtige Zugabe des organischen Peroxids und des Azo-Esters unter Rühren.

### 2. Herstellung der Spritzgußmasse

Der organische Binder wird in einem heizbaren Kneter aufgeschmolzen. In die im Kneter befindliche Schmelze wird das sinterbare Polymer-Pulver bei einer Temperatur von ca. 150°C eingeknetet. Alternativ kann der Binder in wäßriger Dispersion kalt mit dem Pulver gemischt werden. Nach Abtrocknen der Wasseranteile sind die Polymerpartikel mit Binder beschichtet. Die thermoplastische Knetmasse wird zu einem rieselfähigen Granulat, vorzugsweise durch Extrusion, zerkleinert und die Formmasse auf einer Spritzgußmaschine zu einem Formteil verarbeitet.

Das ausgeformte Formteil zeichnet sich im erkalteten Zustand durch gute Festigkeit aus, die eine zerstörungsfreie Entgratbarkeit und mechanische Bearbeitbarkeit gewährleistet.

### 3. Entfernung des Bindemittels 1. Stufe

Das erhaltene Formteil wird in 2 bis 6 Stunden in ca. 50° C warmem Lösemittel oder Wasser gelagert. Dabei wird der Alkoholanteil aus dem Formteil herausgelöst. Die Vollständigkeit der Entwachsung läßt sich mit Hilfe eines im Alkohol gelösten Farbstoffes kontollieren.

### 4. Steigerung der Formstabilität

Das Formteil wird in einem Ofen zunächst mit einer Heizrate von 20° C/min. auf 170 bis 200° C, vorzugsweise 180 bis 190°C, erwärmt und über eine Zeitspanne von 0,1 bis 1 Stunde bei dieser Temperatur gehalten. Dabei wird die Viskosität des organischen Binders durch radikalische Vernetzung der EVA-Komponente infolge der Aufspaltung des organischen Peroxides so erhöht, daß die Verformung des Formlings infolge einer Viskositätserniedrigung, verursacht durch weitere Temperaturerhöhung, ausgeschlossen ist. Durch diese Maßnahme bleibt die Form des Formteils über die gesamte Dauer des folgenden Entwachsungs- und Sinterprozesses erhalten.

### 5. Entfernung des Bindemittels 2. Stufe

Die Entfernung der im Formteil verbliebenen Binderanteile aus dem Formteil erfolgt im Temperaturbereich von 200 bis 400° C in mit Sauerstoff angereicherter Atmosphäre. Bei einer Temperatur oberhalb 220° C werden die Wachs-komponenten, insbesondere die, die Polypropylen enthalten, infolge Aufspaltung des organischen Peroxides radikalisch abgebaut. Unter Sauerstoffausschluß, der trotz sauerstoffhaltiger Gasatmosphäre außerhalb des Formteils innerhalb des Formteils auftritt, werden die Bestandteile des Binders, der Polyethylen enthält (also auch das EVA-Copolymer), nach Aufspaltung des Azo-Esters, in einem Temperaturbereich zwischen 300 und 350° C radikalisch abgebaut. Die Abbauprodukte sind durch die mit Sauerstoff angereicherte Ofenatmosphäre vom Außenbereich des Formteils hin zum Inneren leicht oxidierbar. Unterstützend wirkt dabei das durch die Naßextraktion erhaltene Porensystem, das den Gasfluß innerhalb des Formteils ermöglicht. Nach Abschluß der Entwachsung erfolgt, je nach Pulverrohstoff, die Umstellung der Ofenatmosphäre auf Schutzgas. Erst nach Durchführung dieses Schrittes kann das entwachste Formteil auf Sintertemperatur gebracht werden.

### 6. Sinterprozeß

Das Formteil wird auf eine Temperatur erhitzt, bei der eine Sinterung eintritt.

Nach dem oben beschriebenen Verfahren wird ein spritzgegossenes Formteil mit einer Wandstärke von 6 bis 10 mm innerhalb von 10 Stunden verzugsfrei entwachst und gesintert.

Bei dem oben beschriebenen Verfahren ist in Schritt 1 die Zugabe von Ethylen-Vinylacetat-Copolymer zum Binder optional, dessen Zugabe ist aber sehr vorteilhaft. Auch auf die Zugabe des Azo-Esters in Schritt 1 und die Schritte 3 und 5 kann verzichtet werden, wenn der Binder aus dem Formteil nicht entfernt werden soll.

Die Verwendung eines mehrstufig entwachsbaren Bindersystems bietet Vorteile hinsichtlich der Prozeßdauer. Zur Entfernung von mindestens einer Komponente eignet sich eine Extraktion mit Lösemittel oder Wasser. Die aus der Extraktion erhaltene wässrige Lösung der Bindemittelkomponente ist nicht wassergefährdend. Die Entwachsung der Formteile wird durch radikalischen Abbau des organischen Bindemittels oberhalb der Formgebungstemperatur beschleunigt. Eine Spritzguß-Formmasse, die neben einem Wachs noch ein Ethylen-Vinylacetat-Copolymer, ein organisches Peroxid, einen Azoester und einen Alkohol enthält, läßt sich gut zu einem Formteil spritzgießen und ohne Verlust der Formstabilität des Formteils entwachsen.

Sinterformteile, hergestellt aus einer Formmasse gemäß der Erfindung, sind feinporös und eignen sich zur Filterung von Flüssigkeiten und Gasen. Weitere Anwendungen sind beispielsweise Dichtungsringe und Lager.

In den nachfolgenden Beispielen werden folgende Abkürzungen verwendet:
- DSC: Differential Scan Calorimetrie
- T_{g}: Glastemperatur
- Tₘ: Schmelzpunkt
- TP: Tropfpunkt
- SZ: Säurezahl
- VZ: Verseifungszahl
- HZ: Heizzone
- PPS: Polyphenylensulfid
- PPSO: Polyphenylensulfoxid
- PPSO₂: Polyphenylensulfon

### Beispiel 1

Als Polyphenylensulfon wurde das nachstehend beschriebene Produkt verwendet.
833 g Polyphenylensulfid-Pulver (M_{w} 40 000) mit einem mittleren Partikeldurchmesser von 20 x 10⁻⁶ m wurden in 2,9 dm³ Eisessig bei 55°C suspendiert, 16 cm³ konzentrierte Schwefelsäure zugegeben und 616 g Wasserstoffperoxid (87%ig) unter Temperaturkonstanz zugetropft. Nach 3 Stunden Nachrührzeit bei 58 bis 65°C wurde die Reaktionssuspension abgekühlt, der Feststoff bei 50°C abgesaugt, mit Wasser gewaschen und getrocknet.
Ausbeute: 998 g (93%).
DSC-Daten: T_{g}: 352°C; Tₘ: 520°C (Zersetzung)

| | | | | | | | | | |
|---|---|---|---|---|---|---|---|---|---|
| Elementaranalyse | berechnet | C | 51,42 %, | H | 2,88 %, | O | 22,83 %, | S | 22,87 %, |
| | gefunden | C | 51,39 %, | H | 2,93 %, | O | 22,81 %, | S | 22,86 %. |

0,6 Gew.-Teile Esterwachs auf Rohmontanwachsbasis (TP 79 bis 85°C, SZ 15 bis 20, VZ 130 bis 160, Dichte 1,01 bis 1,03 g/cm³, Viskosität ca. 30 mPa.s/100°C) wurden mit 1,2 Gew.-Teilen Polyolefinwachs(TP 158°C, SZ 0, VZ 0, Dichte 0,87 bis 0,89 g/cm³, Viskosität 1500 mPa.s/170°C),
1,2 Gew.-Teilen eines Ethylen-Vinylacetat-Copolymers (Schmelzindex 0,2 bis 0,4 g/10 min, VA-Anteil 11 bis 13 %, Vicat-E. Temp. 79°C) und einem Alkohol (Molmasse 20000 g/mol, Viskosität 13000 mPa.s bei 20°C, Dichte 1,1 g/cm³) bei 150°C in einem Rührgefäß geschmolzen und zu einer homogenen Schmelze verarbeitet. In diese Schmelze wurden je 0,02 Gew.-Teile 2,2-Azo-bis(2-acetoxy-propan) und eines organischen Peroxids (Scorch-Temperatur ca. 160°C) eingerührt. In die Schmelze wurden nun bei 150°C 12 Gew.-Teile des oben beschriebenen Polyphenylen-sulfon-Pulvers mit einer mittleren Teilchengröße D₅₀ = 20 µm eingeknetet. Die thermoplastische Formmasse wurde auf einer Spritzgußmaschine (Typ KM090/210B, Krauss-Maffei, München, BRD) zu ringförmigen Formteilen mit einem Durchmesser von 50 mm und einer Wandstärke von 4 mm bei folgenden Verfahrensparametern hergestellt: Zylindertemperaturen: Heizzone (HZ) 1 130°C, HZ 2 135°C, HZ 3 140°C, HZ 4 145°C, HZ 5 150°C, Düsentemperatur 150°C, Werkzeugtemperatur 30°C.

Das Formteil wurde anschließend 5 Stunden in ca. 70°C warmem Wasser gelagert. Dabei wurden ca. 40 Gew.-% des Binderanteils aus dem Formteil herausgelöst. Das teilentwachste Formteil wurde mit einer Temperaturerhöhung von 1°C/min. in Luft von Raumtemperatur auf 330°C gebracht. Dabei wurde im Temperaturbereich 170 bis 180°C der verbleibende Binderanteil thermisch vernetzt, um einer Deformation des Formteils infolge Erweichen vorzubeugen. Oberhalb von 200°C wurde der übrige Binderanteil unter radikalischem Abbau thermisch entfernt. Anschließend wurde das Formteil bei 360°C gesintert. Das erhaltene Formteil war rißfrei.

### Beispiel 2

Man verfuhr wie in Beispiel 1, nur wurde anstelle des PPS0₂ eine Mischung aus 90% PPSO₂ und 10 % PPS eingesetzt. Als PPS wurde ®Fortron 0205 B4 der Hoechst AG mit einer mittleren Teilchengröße D₅₀ = 20 µm eingesetzt. Als Polyphenylensulfon wurde das in Beispiel 1 beschriebene Produkt verwendet. Die erhaltenen Formteile zeigten gegenüber Beispiel 1 höhere mechanische Festigkeiten.

### Beispiel 3

Man verfuhr wie in Beispiel 1, nur wurde anstelle des PPS0₂ eine Mischung aus 75% PPSO₂ und 25 % PPSO eingesetzt. Das PPSO mit einer mittleren Teilchengröße D₅₀ = 20 µm wurde, wie in der deutschen Patentanmeldung P 43 14 736.4 beschrieben, hergestellt. Als Polyphenylensulfon wurde das in Beispiel 1 beschriebene Produkt verwendet. Die erhaltenen Formteile zeigten gegenüber Beispiel 2 höhere mechanische Festigkeiten.

## Patentansprüche

1. Formmasse, enthaltend ein sinterbares organisches Polymer mit einem Schmelzpunkt oberhalb von 240°C in Pulverform und einen thermoplastischen Binder auf Wachs-Basis.

2. Formmasse nach Anspruch 1, dadurch gekennzeichnet, daß das sinterbare Polymer ein Polyarylensulfon, ein Polyarylensulfoxid oder ein Polyarylensulfid oder die Kombinationen Polyarylensulfon/Polyarylensulfoxid, Polyarylensulfon/Polyarylensulfid, Polyarylensulfoxid/Polyarylensulfid oder Polyarylensulfon/Polyarylensulfoxid/Polyarylensulfid enthält.

3. Formmasse nach Anspruch 1 oder 2, dadurch gekennzeichnet, daß das sinterbare Polymer eine Mischung aus 33 bis 99 Gew.-% mindestens eines Polyarylensulfons, 1 bis 67 Gew.-% mindestens eines Polyarylensulfoxids und/oder 1 bis 67 Gew.-% mindestens eines Polyarylensulfids enthält, wobei die Summe der Gewichtsanteile von Polyarylensulfon, Polyarylensulfoxid und/oder Polyarylensulfid 100 Gew.-% beträgt.

4. Formmasse nach einem oder mehreren der Ansprüche 1 bis 3, dadurch gekennzeichnet, daß der thermoplastische Binder ein halbsynthetisches Wachs, ein Polyolefinwachs oder ein Rohmontanwachs enthält.

5. Formmasse nach einem oder mehreren der Ansprüche 1 bis 4, dadurch gekennzeichnet, daß der thermoplastische Binder ein Ethylen-Vinylacetat-Copolymer enthält.

6. Formmasse nach einem oder mehreren der Ansprüche 1 bis 5, dadurch gekennzeichnet, daß der thermoplastische Binder ein anorganisches oder organisches Peroxid enthält.

7. Formmasse nach einem oder mehreren der Ansprüche 1 bis 6, dadurch gekennzeichnet, daß der thermoplastische Binder einen Azo-Ester enthält.

8. Formmasse nach einem oder mehreren der Ansprüche 1 bis 7, dadurch gekennzeichnet, daß der thermoplastische Binder einen Alkohol enthält.

9. Formmasse nach einem oder mehreren der Ansprüche 1 bis 8, dadurch gekennzeichnet, daß die Formmasse ein Metall, ein keramisches Material, Glas oder Füllstoffe enthält.

10. Sinterformteil, hergestellt aus einer Formmasse gemäß Anspruch 1.

11. Verfahren zur Herstellung von gesinterten Formteilen, wobei aus einer Formmasse, die mindestens ein sinterbares Polymer und ein thermoplastisches Bindemittel auf Wachsbasis enthält, durch Spritzguß, Pressen oder Extrusion ein geformtes Teil hergestellt wird, das einem Sinterprozeß unterworfen wird.

12. Verfahren zur Herstellung von gesinterten Formteilen nach Anspruch 11, dadurch gekennzeichnet, daß das thermoplastische Bindemittel aus dem geformten Teil entfernt wird.

13. Verwendung des Sinterformteils nach Anspruch 10 zur Filterung.

## Claims

1. A molding material containing a sinterable organic polymer having a melting point above 240°C in powder form and a wax-based thermoplastic binder.

2. The molding material as claimed in claim 1, wherein the sinterable polymer contains a polyarylene sulfone, a polyarylene sulfoxide or a polyarylene sulfide or the combinations polyarylene sulfone/polyarylene sulfoxide, polyarylene sulfone/polyarylene sulfide, polyarylene sulfoxide/polyarylene sulfide or polyarylene sulfone/polyarylene sulfoxide/polyarylene sulfide.

3. The molding material as claimed in claim 1 or 2, wherein the sinterable polymer contains a mixture of from 33 to 99% by weight of at least one polyarylene sulfone, from 1 to 67% by weight of at least one polyarylene sulfoxide and/or from 1 to 67% by weight of at least one polyarylene sulfide, where the sum of the proportions by weight of polyarylene sulfone, polyarylene sulfoxide and/or polyarylene sulfide is 100% by weight.

4. The molding material as claimed in one or more of claims 1 to 3, wherein the thermoplastic binder contains a semisynthetic wax, a polyolefin wax or a crude montan wax.

5. The molding material as claimed in one or more of claims 1 to 4, wherein the thermoplastic binder contains an ethylene/vinyl acetate copolymer.

6. The molding material as claimed in one or more of claims 1 to 5, wherein the thermoplastic binder contains an inorganic or organic peroxide.

7. The molding material as claimed in one or more of claims 1 to 6, wherein the thermoplastic binder contains an azoester.

8. The molding material as claimed in one or more of claims 1 to 7, wherein the thermoplastic binder contains an alcohol.

9. The molding material as claimed in one or more of claims 1 to 8, wherein the molding material contains a metal, a ceramic material, glass or fillers.

10. A sintered molding produced from a molding material as claimed in claim 1.

11. A process for the production of sintered moldings, which comprises producing a shaped article from a molding material which contains at least one sinterable polymer and a wax-based thermoplastic binder by injection molding, compacting or extrusion, which shaped article is subjected to a sintering process.

12. The process for the production of sintered moldings as claimed in claim 11, wherein the thermoplastic binder is removed from the shaped article.

13. The use of the sintered molding as claimed in claim 10 for filtration.

## Revendications

1. Matière à mouler, contenant un polymère organique frittable ayant un point de fusion supérieur à 240°C sous forme de poudre et un liant thermoplastique à base de cire.

2. Matière à mouler suivant la revendication 1, caractérisée en ce que le polymère frittable contient une polyarylènesulfone, un poly(sulfoxyde d'arylène) ou un poly(sulfure d'arylène) ou les combinaisons polyarylènesufone/poly(sulfoxyde d'arylène), polyarylènesulfone/poly(sulfure d'arylène), poly(sulfoxyde d'arylène)/poly(sulfure d'arylène) ou polyarylènesulfone/poly(sulfoxyde d'arylène)/poly(sulfured'arylène).

3. Matière à mouler suivant la revendication 1 ou 2, caractérisée en ce que le polymère frittable contient un mélange de 33 à 99% en poids d'au moins une polyarylènesulfone, de 1 à 67% en poids d'au moins un poly(sulfoxyde d'arylène) et/ou de 1 à 67% en poids d'au moins un poly(sulfure d'arylène), la somme des proportions en poids de polyarylènesulfone, poly(sulfoxyde d'arylène) et/ou poly(sulfure d'arylène) valant 100% en poids.

4. Matière à mouler suivant l'une ou plusieurs des revendications 1 à 3, caractérisée en ce que le liant thermoplastique contient une cire semi-synthétique, une cire de polyoléfine ou une cire minérale brute.

5. Matière à mouler suivant l'une ou plusieurs des revendications 1 à 4, caractérisée en ce que le liant thermoplastique contient un copolymère éthylène - acétate de vinyle.

6. Matière à mouler suivant l'une ou plusieurs des revendications 1 à 5, caractérisée en ce que le liant thermoplastique contient un peroxyde inorganique ou organique.

7. Matière à mouler suivant l'une ou plusieurs des revendications 1 à 6, caractérisée en ce que le liant thermoplastique contient un azoester.

8. Matière à mouler suivant l'une ou plusieurs des revendications 1 à 7, caractérisée en ce que le liant thermoplastique contient un alcool.

9. Matière à mouler suivant l'une ou plusieurs des revendications 1 à 8, caractérisée en ce que la matière à mouler contient un métal, un matériau céramique, du verre ou des charges.

10. Pièce moulée frittée, fabriquée à partir d'une matière à mouler suivant la revendication 1.

11. Procédé de fabrication de pièces moulées frittées, dans lequel on fabrique une pièce moulée qui est soumise à un procédé de frittage par moulage par injection, par compression ou par extrusion à partir d'une matière à mouler qui contient au moins un polymère frittable et un liant thermoplastique à base de cire.

12. Procédé de fabrication de pièces moulées frittées suivant la revendication 11, caractérisé en ce que le liant thermoplastique est éliminé de la pièce moulée.

13. Utilisation de la pièce moulée frittée suivant la revendication 10 pour le filtrage.
